# DEMANDE DE BREVET EUROPEEN

(11) **EP 1 003 345 A1**
(43) Date de publication de la demande: **24.05.2000**
(21) Numéro de dépôt: 99402840.5
(22) Date de dépôt: 17.11.1999
(51) Int. Cl.: H04Q 7/26

(54) **Système de télécommunication sans fil à mobilité étendue**

(30) Priorité: 19.11.1998 FR 9814539
(71) Demandeur: ALCATEL, 75008 Paris (FR)
(72) Inventeur: Roberts, Michael, 92200 Neuilly s/Seine (FR); Courau, François, 92190 Meudon (FR); Rubon, Jean-François, 75018 Paris (FR)
(74) Mandataire: El Manouni, Josiane

(57) **Abrégé**

Système de télécommunication sans fil, dans lequel des utilisateurs de terminaux sans fil accèdent à un réseau public filaire via des équipements dits équipements fixes, ce système étant essentiellement caractérisé en ce que, au moins un utilisateur dit utilisateur itinérant accédant audit réseau public filaire via un équipement fixe (PBS) dit équipement fixe visité, et ledit réseau public filaire (PSTN) n'étant pas équipé pour recevoir la signalisation relative à l'identité de celui des utilisateurs qui émet un appel via ledit équipement fixe, ce système comporte des moyens pour déterminer, en coopération avec ledit réseau public filaire, la taxation à appliquer audit utilisateur itinérant .

## Description

La présente invention concerne d'une manière générale les systèmes de télécommunication autorisant une mobilité de leurs utilisateurs.

On connaît différents types de tels systèmes de télécommunication, qui se différencient essentiellement par leur couverture géographique, par les services qu'ils proposent, et par le coût de ces services.

On connaît ainsi les systèmes de télécommunication dits mobiles, de type cellulaire, qui ont une couverture géographique relativement large (typiquement une région, un pays, ou un continent), autorisant une mobilité relativement grande, mais impliquant des coûts de communication relativement élevés.

Dans ces systèmes mobiles, des terminaux ou stations mobiles sont en relation avec un réseau mobile ou PLMN (pour : "Public Land Mobile Network") relié au réseau public filaire tel que le réseau PSTN (pour "Public Switched Telephone Network") et comportant, de manière connue, un sous-système de stations de base BSS (pour "Base Station Subsystem") et un sous-système de réseau et de commutation NSS (pour "Network Sub-System"). Ces systèmes mobiles comportent en outre des moyens centralisés de gestion de leurs utilisateurs, notamment de gestion de mobilité et de droits d'accès, notamment grâce à des bases de données d'utilisateurs mobiles telles que HLR (pour "Home Location Register" ou VLR (pour "Visitor Location Register").

On connaît en outre les systèmes dits sans fil, qui ont une couverture géographique relativement plus étroite, autorisant une mobilité relativement plus faible, mais impliquant aussi des coûts de communication relativement plus faibles. Ces systèmes sans fil peuvent eux-mêmes être conçus pour divers types d'environnement, notamment privé (résidentiel ou professionnel) .

Dans ces systèmes sans fil, des terminaux ou stations sans fil accèdent à un réseau public filaire tel que notamment le réseau PSTN via des équipements dits ici de manière générale équipements fixes. Par exemple, dans une application résidentielle, un équipement fixe comporte une seule station de base reliée au réseau public filaire et apte à communiquer avec un terminal sans fil correpondant à un utilisateur donné. Dans une application professionnelle, un équipement fixe peut comporter plusieurs stations de base, aptes à communiquer avec plusieurs terminaux correspondant à un groupe d'utilisateurs donné, et reliées à une partie centrale commune, elle-même reliée au réseau public filaire via un autocommutateur privé ou PABX (ou "Private Automatic Branch Exchange").

Un besoin existe d'étendre la mobilité des utilisateurs de systèmes sans fil, notamment de façon à permettre une itinérance (ou "roaming" en anglais) entre divers types d'environnements. Ce concept correspond à celui connu sous le nom de CTM (pour "Cordless Telephone Mobility").

Des systèmes sans fil ont ainsi été proposés, qui intègrent des moyens centralisés de gestion de leurs utilisateurs, notamment de gestion de mobilité et de droits d'accès. Notamment, de tels moyens centralisés de gestion d'utilisateurs peuvent être prévus pour fournir au réseau public filaire l'intelligence nécessaire à la mise en oeuvre d'un tel service de mobilité étendue, ou d'itinérance. Ils correspondent alors physiquement à une entité généralement appelée point de commande de service (ou SCP, pour "Service Control Point"), à laquelle le réseau public filaire accède via un commutateur particulier généralement appelé point de commutation de service (ou SSP, pour "Service Switching Point").

Un besoin existe aussi d'étendre la mobilité des utilisateurs de systèmes sans fil, de manière à leur permettre d'accéder au réseau public filaire via des équipements fixes auxquels ils ne sont normalement pas autorisés à accéder, de par les abonnements qu'ils ont souscrits, mais pour lesquels ils reçoivent l'autorisation de leur propriétaire de les utiliser. Ce second type de mobilité étendue, ou d'itinérance, s'applique également au cas de terminaux bi-mode (mobile /sans fil), et est alors notamment intéressant pour le cas de systèmes mobiles ayant localement une couverture insuffisante, ou pour le cas d'utilisateurs préférant continuer à bénéficier des tarifs de communication plus avantageux offerts par les systèmes sans fil.

Ce second type de mobilité étendue, ou d'itinérance, peut utiliser les mêmes moyens centralisés de gestion d'utilisateurs que le premier type mentionné précédemment. Cependant, dans ce second type, pour permettre à un utilisateur itinérant d'émettre ou de recevoir des appels via un équipement fixe auquel il n'est normalement pas autoriser à accéder, et sous la couverture duquel il se trouve, il est nécessaire d'enregistrer "manuellement" cet utilisateur dans cet équipement fixe, en coopération avec lesdits moyens centralisés de gestion d'utilisateurs, cet enregistrement n'étant pas en effet, contrairement au premier type, assuré automatiquement par le système lui-même.

Dans ce contexte, un problème se pose pour la taxation des appels émis par un utilisateur itinérant, via un équipement dit équipement fixe visité, sous la couverture duquel il vient à se trouver, et dans lequel il est ainsi enregistré, manuellement ou automatiquement. Ce problème se pose plus particulièrement dans le cas où le réseau public filaire n'est pas équipé pour recevoir la signalisation relative à l'identité de celui des utilisateurs qui émet un appel, via un équipement fixe donné. Dans le cas où le réseau public filaire est équipé pour recevoir une telle signalisation (cas du réseau ISDN, notamment), l'appel peut être routé vers celui des commutateurs de ce réseau qui constitue le point d'accès au service considéré, lequel gère alors l'appel et la taxation associée. Un utilisateur itinérant peut alors être taxé pour ses propres appels. Dans le cas contraire (cas du réseau PSTN, notamment), l'appel est géré par le commutateur local (ou LE, pour "Local Exchange") auquel est raccordé l'équipement fixe considéré. Dans ce cas, c'est le propriétaire de l' équipement fixe, et non l'utilisateur itinérant, qui est taxé pour les appels de ce dernier. Une solution doit donc être trouvée pour ce type de réseau public filaire, qui représente une part importante des infrastructures de télécommunication existantes, et qu'il n'est pas envisageable de modifier pour permettre une telle utilisation.

La présente invention a notamment pour but d'apporter une solution à ce problème.

Un des objets de la présente invention consiste ainsi dans un système de télécommunication sans fil, dans lequel des utilisateurs de terminaux sans fil accèdent à un réseau public filaire via des équipements dits équipements fixes, ce système étant essentiellement caractérisé en ce que, au moins un utilisateur dit utilisateur itinérant accédant audit réseau public filaire via un équipement fixe dit équipement fixe visité, et ledit réseau public filaire n'étant pas équipé pour recevoir la signalisation relative à l'identité de celui des utilisateurs qui émet un appel via ledit équipement fixe, ce système comporte des moyens pour déterminer, en coopération avec ledit réseau public filaire, la taxation à appliquer audit utilisateur itinérant.

D'autres objets et caractéristiques de la présente invention apparaîtront à la lecture de la description suivante d'exemples de réalisation, faite en relation avec les dessins ci-annexés dans lesquels:
- la figure 1 est un schéma destiné à illustrer un exemple d'application de la présente invention,
- la figure 2 est un schéma destiné à illustrer un premier exemple de réalisation de la présente invention,
- la figure 3 est un schéma destiné à illustrer un deuxième exemple de réalisation de la présente invention,
- la figure 4 est un schéma destiné à illustrer un troisième exemple de réalisation de la présente invention.

La présente invention a donc pour objet un système de télécommunication sans fil, dans lequel des utilisateurs de terminaux sans fil accèdent à un réseau public filaire via des équipements dits équipements fixes, et dans lequel au moins un utilisateur itinérant accède audit réseau public filaire via un équipement fixe, dit équipement fixe visité.

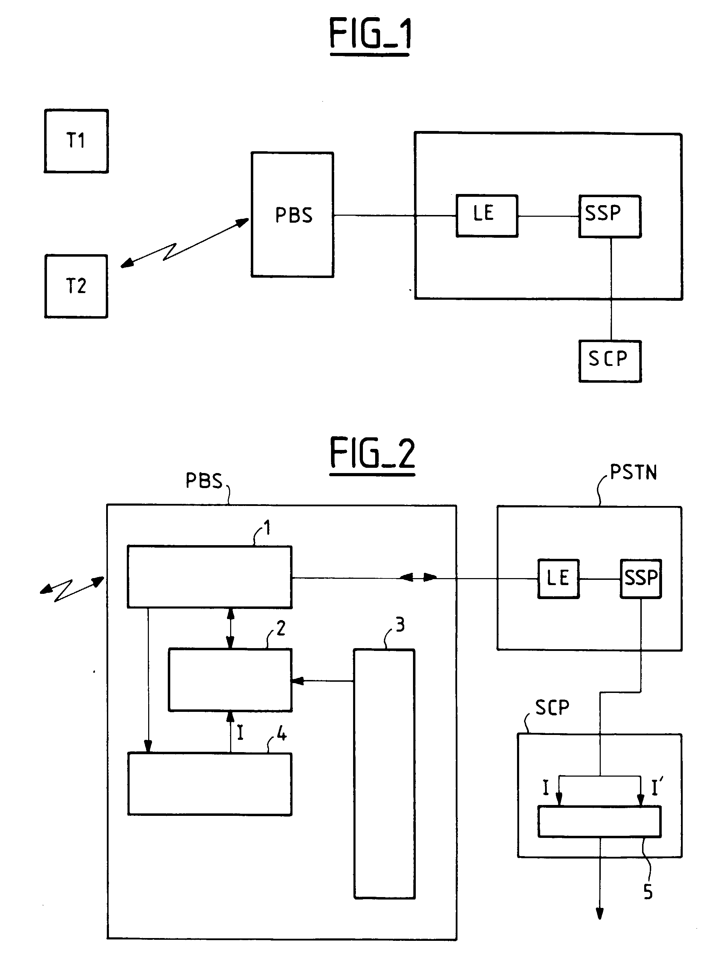

Dans l'exemple illustré sur la figure 1, deux utilisateurs de terminaux sans fil T1 et T2 accèdent ainsi au réseau public filaire PSTN via un équipement fixe constitué par une station de base privée PBS.

Il est supposé que l'utilisateur de l'un de ces terminaux (T2 par exemple) est autorisé par le propriétaire de la station de base privée PBS (en l'occurrence l'utilisateur du terminal T1) à utiliser cette station de base privée. Ceci nécessite en l'occurrence un enregistrement "manuel" du terminal T2 dans la station de base privée PBS, c'est-à-dire une commande spécifique d'inscription de données d'enregistrement dans un point de commande de service ou SCP. Notamment, dans le cas où le protocole de transmission entre la station de base et le réseau public filaire ne comporte pas de transmission de telles données (ce qui est le cas pour le réseau PSTN), la station de base privée PBS appelle pour cela un numéro particulier correspondant à ce point de commande de service, en vue de lui transmettre, notamment au moyen d'une liaison par modem, de telles données.

En résultat de l'enregistrement du terminal T2 dans la station de base privée PBS, le terminal T2 est autorisé à émettre ou recevoir des appels via cette station de base, et les appels reçus sont routés vers cette station de base.

Un équipement fixe tel que par exemple la station de base privée PBS illustrée sur la figure 1 comporte ainsi, dans les exemples illustrés sur les figures 2, 3 et 4:
- des moyens 1 pour effectuer une conversion de protocole de transmission, du protocole utilisé sur l'interface radio entre un terminal et cette station de base, vers le protocole utilisé sur la liaison reliant cette station de base au PSTN, et inversement,
- des moyens 2 permettant à la station de base PBS d'échanger des données avec le point de commande de service SCP, via le réseau PSTN, notamment pour l'enregistrement "manuel" d'un utilisateur itinérant, dans cette station de base,
- des moyens d'interface homme-machine 3, notamment pour la commande d'un tel enregistrement "manuel".

Suivant l'invention, ledit réseau public filaire n'étant pas équipé pour recevoir la signalisation relative à l'identité de celui des utilisateurs qui émet un appel via ledit équipement fixe, ce système comporte des moyens pour déterminer, en coopération avec ledit réseau public filaire, la taxation à appliquer audit utilisateur itinérant .

Dans l'exemple illustré sur la figure 2, lesdits moyens pour déterminer, en coopération avec ledit réseau public filaire, la taxation à appliquer audit utilisateur itinérant, comportent :
- dans un équipement fixe tel que par exemple la station de base privée PBS de la figure 1:
   -- des moyens 4 pour mémoriser des informations dites de taxation, notées 1, relatives aux appels émis via ledit équipement fixe par ledit utilisateur itinérant,
   -- des moyens pour transmettre les informations de taxation I ainsi mémorisées dans les moyens 4, au point de commande de service SCP,
- dans le point de commande de service SCP:
   -- des moyens 5 pour combiner les informations de taxation I ainsi transmises par ledit équipement fixe, à des informations de taxation notées I', élaborées dans ledit réseau public filaire .

Les informations de taxation I mémorisées dans les moyens 4 peuvent comporter notamment :
- des informations d'identification d'utilisateur, qui peuvent être extraites, dans les moyens 1, des informations transmises sur l'interface radio entre terminal et station de base privée, suivant le protocole de transmission utilisé sur cette interface radio,
- des informations de numéro appelé, qui peuvent également être extraites, dans les moyens 1, des informations transmises d'un terminal vers la station de base privée,
- des informations relatives à la durée de l'appel, qui peuvent également être extraites, dans les moyens 1, des informations transmises d'un terminal vers la station de base privée, et/ou des informations reçues du PSTN par la station de base privée PBS.

Les informations de taxation I mémorisées dans les moyens 4 peuvent être transmises au point de commande de service SCP au moyen d'un appel spécifique dans le cas où le protocole de transmission entre la station de base et le réseau public filaire ne comporte pas de transmission de telles données (ce qui est le cas pour le réseau PSTN considéré). De tels moyens de transmission peuvent alors être confondus avec les moyens 2; c'est pourquoi ils n'ont pas été illustrés spécifiquement sur la figure 2.

Les informations de taxation I' peuvent être des informations de taxation élaborées de manière classique dans ledit réseau public filaire, et représentant la taxation qui serait, de manière classique, appliquée au propriétaire dudit équipement fixe.

Les informations de taxation I transmises par ledit équipement fixe peuvent être combinées aux informations de taxation I' élaborées dans ledit réseau public filaire, de manière à fournir au propriétaire de la station de base privée PBS une facturation détaillée des appels émis via cette station de base. Des mécanismes de compensation entre opérateurs peuvent en outre être pris en compte, suivant des techniques habituelles.

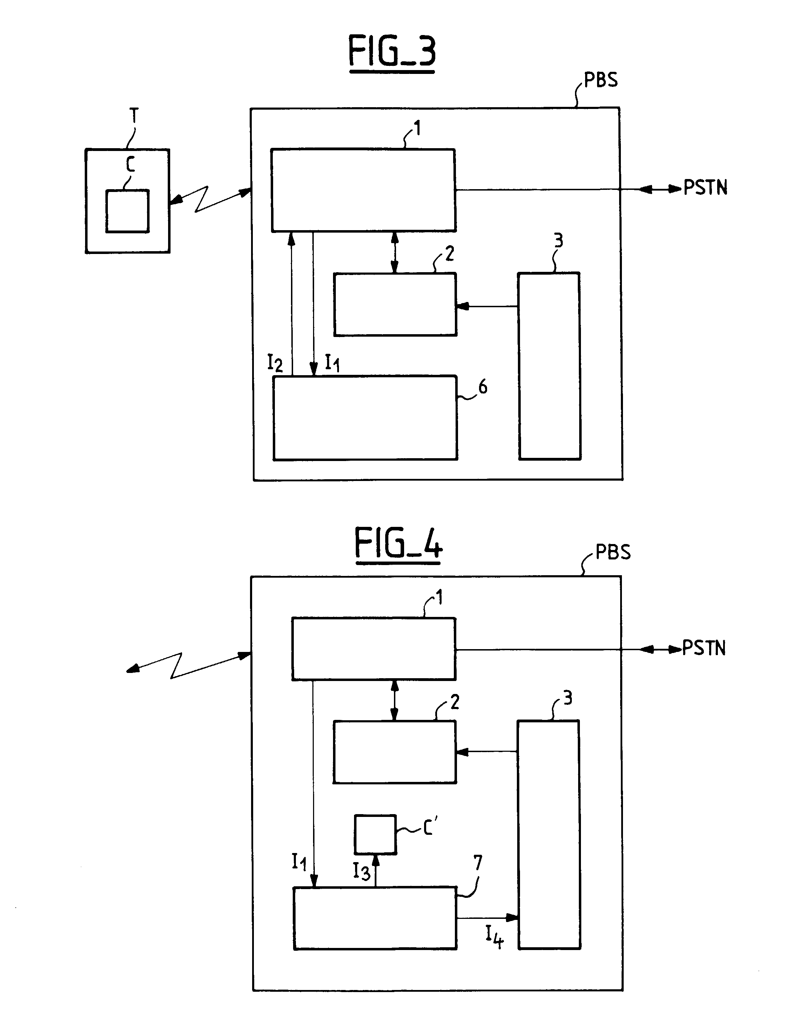

Les exemples illustrés sur les figures 3 et 4 correspondent au cas où des moyens dits de pré-paiement sont utilisés. De manière connue, de tels moyens de pré-paiement peuvent être constitués par une carte pré-payée, contenant un certains nombre d'unités de crédit dont le montant est mis à jour, pendant chaque appel, grâce à des impulsions de taxation reçues du réseau public filaire pendant cet appel (l'appel étant éventuellement coupé lorsque le solde devient négatif). Egalement de manière connue, de tels moyens de pré-paiement peuvent être rechargés automatiquement, par le système lui-même .

Dans l'exemple de la figure 3, lesdits moyens de pré-paiement sont constitués par une carte C insérée dans un terminal T. Dans cet exemple, lesdits moyens pour déterminer, en coopération avec ledit réseau public filaire, la taxation à appliquer audit utilisateur itinérant, comportent, dans un équipement fixe tel que par exemple la station de base privée PBS de la figure 1:
- des moyens 6 pour déterminer, à partir d'impulsions de taxation notées I1 reçues du PSTN pendant un appel émis par ledit utilisateur itinérant, des informations de taxation notées 12 à transmettre au terminal de cet utilisateur, en vue de mettre à jour lesdits moyens de pré-paiement C de ce terminal.

Les impulsions de taxation I1 peuvent être extraites, dans les moyens 1, des informations reçues par la station de base privée PBS du réseau PSTN. les informations de taxation 12 peuvent être insérées, dans les moyens 1, aux informations transmises sur l'interface radio entre la station de base privée PBS et le terminal T.

Dans l'exemple de la figure 4, lesdits moyens de pré-paiement sont constitués par une carte C' insérée dans la station de base privée PBS. Dans cet exemple, lesdits moyens pour déterminer, en coopération avec ledit réseau public filaire, la taxation à appliquer audit utilisateur itinérant, comportent, dans un équipement fixe tel que par exemple la station de base privée PBS de la figure 1:
- des moyens 7 pour déterminer, à partir d'impulsions de taxation (notées également I1) reçues du PSTN pendant un appel émis par ledit utilisateur itinérant, d'une part des informations de taxation notées 13 destinées à mettre à jour lesdits moyens de pré-paiement C', d'autre part des informations de taxation notées 14 représentant la taxation à appliquer audit utilisateur itinérant, pour l'appel considéré. Les informations de taxation l4 peuvent notamment être présentées via les moyens d'interface homme-machine 3 et être utilisées pour un paiement direct de ses communications, par un utilisateur itinérant, au propriétaire de la station de base privée PBS.

La réalisation particulière des différents moyens illustrés sur les exemples des figures 1 à 4 ne posant pas de problème particulier à l'homme du métier, ces différents moyens ne nécessitent pas d'être décrits de manière plus détaillée que par leur fonction.

Par ailleurs, on notera que les schémas des figures 1 à 4 ne constituent que des exemples particuliers destinés à illustrer certains exemples de mise en oeuvre de cette invention, et que d'autres exemples sont bien entendu possibles.

## Revendications

1. Système de télécommunication sans fil, dans lequel des utilisateurs de terminaux sans fil accèdent à un réseau public filaire via des équipements dits équipements fixes, ce système étant caractérisé en ce que, au moins un utilisateur dit utilisateur itinérant accédant audit réseau public filaire via un équipement fixe (PBS) dit équipement fixe visité, et ledit réseau public filaire (PSTN) n'étant pas équipé pour recevoir la signalisation relative à l'identité de celui des utilisateurs qui émet un appel via ledit équipement fixe, ce système comporte des moyens(2,4, 5 - 6 - 7) pour déterminer, en coopération avec ledit réseau public filaire, la taxation à appliquer audit utilisateur itinérant .

2. Système selon la revendication 1, caractérisé en ce que, ledit système comportant en outre un point de commande de service (SCP) , accessible par ledit réseau public filaire (PSTN), lesdits moyens pour déterminer, en coopération avec ledit réseau public filaire, la taxation à appliquer audit utilisateur itinérant comportent:
- dans ledit équipement fixe (PBS):
-- des moyens (4) pour mémoriser des informations de taxation (I) relatives aux appels émis par ledit utilisateur itinérant,
-- des moyens (2) pour transmettre les informations de taxation (I) ainsi mémorisées, audit point de commande de services (SCP),
- dans ledit point de commande de service (SCP):
-- des moyens (5) pour combiner les informations de taxation (I) ainsi transmises par ledit équipement fixe, à des informations de taxation (I') élaborées dans ledit réseau public filaire.

3. Système selon la revendication 1, caractérisé en ce que, dans le cas de terminaux (T) dits à moyens de pré-paiement (C), lesdits moyens pour déterminer, en coopération avec ledit réseau public filaire, la taxation à appliquer audit utilisateur itinérant comportent, dans ledit équipement fixe (PBS) :
- des moyens (6) pour déterminer, à partir d'impulsions de taxation (I1) reçues dudit réseau public filaire pendant un appel émis par ledit utilisateur itinérant, des informations de taxation (12) à transmettre au terminal de cet utilisateur, en vue de mettre à jour lesdits moyens de pré-paiement (C) de ce terminal.

4. Système selon la revendication 1, caractérisé en ce que, dans le cas d'équipement fixe (PBS) dit à moyens de pré-paiement (C'), lesdits moyens pour déterminer, en coopération avec ledit réseau public filaire, la taxation à appliquer audit utilisateur itinérant comportent, dans ledit équipement fixe (PBS) :
- des moyens (7) pour déterminer, à partir d'impulsions de taxation (I1) reçues dudit réseau public filaire pendant un appel émis par ledit utilisateur itinérant, d'une part des informations de taxation ( 13) destinées à mettre à jour lesdits moyens de pré-paiement (C'), d'autre part des informations de taxation ( 14) représentant la taxation à appliquer audit utilisateur itinérant pour ledit appel.
